**Europäisches Patentamt**

**European Patent Office**

**Office européen des brevets**

(19)

(11) Veröffentlichungsnummer: **0 479 173 A2**

# EUROPÄISCHE PATENTANMELDUNG

(12)

(21) Anmeldenummer: **91116620.5**

(22) Anmeldetag: **30.09.91**

(51) Int. Cl.5: **B23Q 16/00**

(30) Priorität: **05.10.90 DE 4031559**

(43) Veröffentlichungstag der Anmeldung:
**08.04.92 Patentblatt 92/15**

(84) Benannte Vertragsstaaten:
**CH DE FR GB IT LI SE**

(71) Anmelder: **Firma Carl Zeiss**

**W-7920 Heidenheim (Brenz)(DE)**

(84) **CH DE FR IT LI SE**

(71) Anmelder: **CARL-ZEISS-STIFTUNG, HANDELND ALS CARL ZEISS**

**W-7920 Heidenheim an der Brenz(DE)**

(84) **GB**

(72) Erfinder: **Breyer, Karl-Hermann, Dr.**
**Friedrich-Pfennig-Strasse 73**
**W-7920 Heidenheim(DE)**
Erfinder: **Szenger, Franz**
**Wielandstrasse 14**
**W-7923 Königsbronn(DE)**

(54) **Verfahren zum Zentrieren bzw. Ausrichten von rotationssymmetrischen Teilen.**

(57) Zum Zentrieren des Werkstücks (1) auf der Bearbeitungsmaschine in Bezug auf eine nichtkörperliche, virtuelle Achse (AF) wird das rotationssymmetrische Werkstück (1) auf dem Drehtisch der Bearbeitungsmaschine in Bezug auf eine reale Fläche (2) von einem Meßtaster (6) angemessen. Das zyklische Signal ($U_1$) des Meßtasters wird gleichzeitig mit einem Signal ($U_2$) überlagert, das die Abweichungen der realen Fläche von der virtuellen Achse (AF) angibt. Dieses Signal wird in einem Mikrorechner (7) aus Korrekturdaten abgeleitet, die bei der vorhergehenden Vermessung des zu bearbeitenden Werkstücks (1) auf einem Koordinatenmeßgerät bezogen auf die Lage der virtuellen Achse (AF) gewonnen worden sind.

Fig.3

Rotationssymmetrische Teile wie z.B. Ringe oder Zahnräder werden auf dem Bearbeitungsgerät, beispielsweise einer Schleifmaschine, in der Regel bezogen auf körperlich vorhandene geometrische Formen, beispielsweise bezogen auf die Achse einer Innenbohrung ausgerichtet. Hierbei geht man so vor, daß das Werkstück z.B. mit einem Induktivtaster angetastet und anschließend die Drehbewegung der Bearbeitungsmaschine eingeschaltet wird. Ist das Werkstück exzentrisch aufgespannt, dann ändert sich der vom Induktivtaster abgegebene Meßwert zyklisch. Durch "klopfen" wird nun das Werkstück sukzessive in die Lage gebracht, in der die Meßwertänderung (Zeigerausschlag) verschwindet bzw. vernachlässigbar klein ist. Das Werkstück ist nun zur entsprechenden geometrischen Form z.B. der zylindrischen Bohrung bzw. deren Achse ausgerichtet.

Diese Technik wird in der Fertigung schon lange angewendet.

Die beschriebene Technik versagt, wenn die Bohrung selbst unrund ist bzw. Formabweichungen aufweist, oder wenn auf eine Achse bezogen zentriert werden soll, die nicht der Bohrungsachse entspricht. Hierbei überlagern sich dann Unrundheit und Exzentrizität und es ist nicht mehr möglich, den Zeigerausschlag des Meßinstrumentes "wegzuklopfen".

Das beschriebene Problem tritt insbesondere auf, wenn Zahnräder bearbeitet bzw. nachbearbeitet werden müssen, und die Achse ihrer Innenbohrung nicht mit der Achse übereinstimmt, die durch den Zahnkranz gegeben ist. Ein Zentrieren auf die Symmetrieachse des Zahnkranzes ist mit der vorstehend beschriebenen Methode nicht möglich, da mit dem Induktivtaster lediglich die "glatte" Fläche der Innenbohrung abgetastet werden kann.

Andererseits müssen vor der endgültigen Fertigbearbeitung die betreffenden Werkstücke hinsichtlich ihrer Toleranzen auf einem hochgenauen Koordinatenmeßgerät vermessen werden. Mit den Meßwerten werden dann noch zum Teil komplexe Berechnungen durchgeführt, um die für die nachfolgende Bearbeitung optimale Ausgangspositionen zu ermitteln. Die Ausgangspositionen sind fiktive ideale geometrische Elemente wie z.B. ein Punkt, ein Kreis, eine Ebene u.s.w., deren individuelle Lage relativ zum Werkstück als Datensatz im Rechner des Koordinatenmeßgerätes gespeichert ist.

Bei der weiteren Bearbeitung des Werkstückes muß nun Bezug genommen werden auf diese optimalen Ausgangs- bzw. Referenzpositionen. Das Problem hierbei besteht darin, auf der Bearbeitungsmaschine den Bezug von den realen Werkstückpositionen zu den gemessenen optimalen Referenzpositionen wieder herzustellen. Das geschieht bisher nach zwei unterschiedlichen Verfahren:

a) Auf der Bearbeitungsmaschine wird das Bearbeitungswerkzeug gegen einen Tastkopf ausgewechselt und das Werkstück wird nochmals auf der Bearbeitungsmaschine vermessen. Da es dort aufgespannt ist und seine Lage anschließend nicht mehr verändert, kann die Bearbeitung bezogen auf die gemessene Lage erfolgen. Das hat aber den Nachteil, daß die Bearbeitungsmaschine durch den zusätzlichen Meßlauf erst einmal stillgelegt ist und sich demzufolge die Bearbeitungszeit erhöht. Zudem kann auch nicht jede Bearbeitungsmaschine Meßaufgaben lösen und mit einem Meßtaster ausgerüstet werden. Hinzu kommt, daß Koordinatenmessungen auf einer Bearbeitungsmaschine hinsichtlich der erzielbaren Genauigkeit begrenzt sind.

b) Das Werkstück wird auf einer mit ausreichend genauen Referenzflächen versehenen Palette fixiert und zusammen mit der Palette auf einem Koordinatenmeßgerät vermessen. Die ermittelten Referenzpositionen des Werkstücks sind dann auf die geometrischen Elemente der Palette bezogen, so daß der Anschluß hergestellt ist, wenn die Palette zusammen mit dem Werkstück auf die Bearbeitungsmaschine gebracht wird.

Die Palettentechnik erfordert aber einen relativ hohen Aufwand und ist außerdem für einige Bearbeitungsgänge entweder nicht wirtschaftlich oder überhaupt nicht durchführbar.

Der Erfindung liegt deshalb die Aufgabe zugrunde, ein möglichst einfach und ohne hohen gerätetechnischen Zusatzaufwand durchzuführendes Verfahren anzugeben, mit dem es möglich ist, rotationssymmetrische Teile in Bezug auf virtuelle, d.h. nicht körperliche Achsen auf einer Bearbeitungsmaschine zu zentrieren.

Diese Aufgabe wird durch die im Anspruch 1 angegebenen Schritte folgendermaßen gelöst:

a) An dem Teil wird eine die Drehlage des Teils charakterisierende Markierung angebracht,

b) die zu bearbeitende rotationssymmetrische Fläche wird in einer Vielzahl von Winkelpositionen auf einem Meßgerät vermessen und es werden die Abweichungen der Fläche von einem idealen Kreis um die virtuelle Achse in den verschiedenen Winkelpositionen aufgenommen und auf die Markierung bezogen gespeichert,

c) das Werkstück wird auf den Drehtisch der Bearbeitungsmaschine aufgelegt bzw. in deren Spindel gespannt und die zu bearbeitende rotationssymmetrische Fläche wird von einem Abstandssensor angemessen,

d) das Werkstück wird in Rotation versetzt und an der Stelle der Markierung wird ein zyklisches Triggersignal abgeleitet,

e) dem Signal des Abstandssensors wird im Takte des Triggersignales ein aus den gespeicherten Abweichungen abgeleitetes Korrektursignal überlagert,

f) das überlagerte Gesamtsignal bzw. eine hiervon abgeleitete Signalfolge wird visuell angezeigt.

Auf diese Weise läßt sich mit nur sehr geringem Zusatzaufwand und den in der Fertigung bereits üblichen, einfachen Meßmitteln das Werkstück auch dann gegenüber nicht körperlichen Achsen zentrieren, wenn die angemessene Bohrung etc. Formabweichungen besitzt oder sonstwie fehlerhaft ist. Es ist lediglich erforderlich, die bereits ohnehin auf einem Koordinatenmeßgerät gemessenen Formabweichungen der Fläche, die nachher beim Zentrieren angemessen wird, z.B. in einem Mikrorechner in ein Signal aufzubereiten, das dem Signal des beim Zentrieren benutzten Abstandssensors überlagert wird.

Da die winkelmäßige Zuordnung zwischen den gespeicherten Korrekturdaten und dem Signal des Abstandssensors über eine entsprechende Markierung an dem zu bearbeitenden Teil erfolgt, ist es zweckmäßig, hierzu eine Kerbe an der rotationssymmetrischen Fläche vorzusehen, gegen die der Abstandssensor mißt. Es ist dann nämlich möglich, jedesmal beim überfahren der Kerbe mit dem Abstandssensor selbst ein Triggersignal zu gewinnen, das zur Synchronisation der beiden genannten Signale verwendet werden kann. Diese Art der Markierung ist außerdem sehr dauerhaft. Es ist jedoch auch möglich, das Teil mit einer Farbmarkierung zu versehen, die dann allerdings durch eine separate Leseeinrichtung abgetastet werden soll.

Die zur Durchführung des Verfahrens benötigte Vorrichung bzw. die Geräte, aus denen das Gesamtsystem bestehen muß, umfassen

a) ein Koordinatenmeßgerät,

b) eine Bearbeitungsmaschine für rotationssymmetrische Teile mit einem Drehtisch oder einer Spindel,

c) einen Abstandssensor,

d) einen Rechner mit einer Eingabeeinheit für gespeicherte Formabweichungen des zu bearbeitenden Teils, welcher eine aus den Formabweichungen abgeleitete Signalfolge produziert,

e) eine Anzeigeeinheit, auf der die vom Rechner produzierte Signalfolge und das Ausgangssignal des Abstandssensors überlagert darstellbar sind.

Als Anzeigevorrichtung kann beispielsweise ein einfaches analoges Zeigerinstrument verwendet werden. Es ist jedoch auch möglich, bei Verwendung eines geeigneten Rechners dessen Bildschirm selbst für die Anzeige des aus der Überlagerung des Abstands- und des Korrektursignales gewonnenen, für die visuelle Darstellung benutzten Gesamtsignals zu verwenden, beispielsweise in Form eines sogenannten "Software-Zeigers", d.h. einen in seiner Länge von der Signalstärke abhängigen, auf dem Bildschirm graphisch dargestellten Balken.

Der Abstandssensor kann entweder ein mechanischer Taster, beispielsweise ein Induktivtaster sein. Es ist jedoch auch möglich, stattdessen berührungslose optische Abstandssensoren zu verwenden.

Wenn der Vergleich zwischen den gespeicherten Abweichungen und dem Abstandssignal im Rechner erfolgt, dann ist es außerdem auf sehr einfache Weise möglich, mit einem geeigneten Programm festzustellen, ob die Abweichungen zu dem zyklischen Abstandssignal "passen". Dieser Vergleich kann dazu dienen, das zu bearbeitende Werkstück für den Benutzer zu identifizieren, d.h. ihm in Form einer ja/nein-Aussage als Information auf dem Bildschirm des Rechners mitzuteilen, ob er die für das betreffende Werkstück passenden Korrekturdatensätze in den Speicher des Rechners geladen hat oder nicht.

Ein solches Programm kann außerdem dazu dienen, die Drehrichtung zu "invertieren", d.h. die Korrekturdatensätze für beide Drehrichtungen mit dem zyklischen Abstandssignal zu vergleichen und die vorstehend genannte Überprüfung vorzunehmen.

Weitere Vorteile der Erfindung ergeben sich aus der nachfolgenden Beschreibung von Ausführungsbeispielen anhand der Figuren 1 bis 4 der beigefügten Zeichnungen.

Figur 1    Ist eine perspektivische Darstellung eines für die Bearbeitung vorgesehenen rotationssymmetrischen Werkstücks;

Figur 2    ist ein Diagramm, in dem die Formabweichungen des Teils aus Figur 1 übertrieben dargestellt sind;

Figur 3    ist ein einfaches Blockschaltbild, in dem ein Ausführungsbeispiel für die zur Durchführung des erfindungsgemäßen Verfahrens benutzte Zusatzelektronik dargestellt ist;

Figur 4    ist ein einfaches Blockschaltbild, in dem ein zweites Ausführungsbeispiel für die zur Durchführung des erfindungsgemäßen Verfahrens benutzte Zusatzelektronik dargestellt ist.

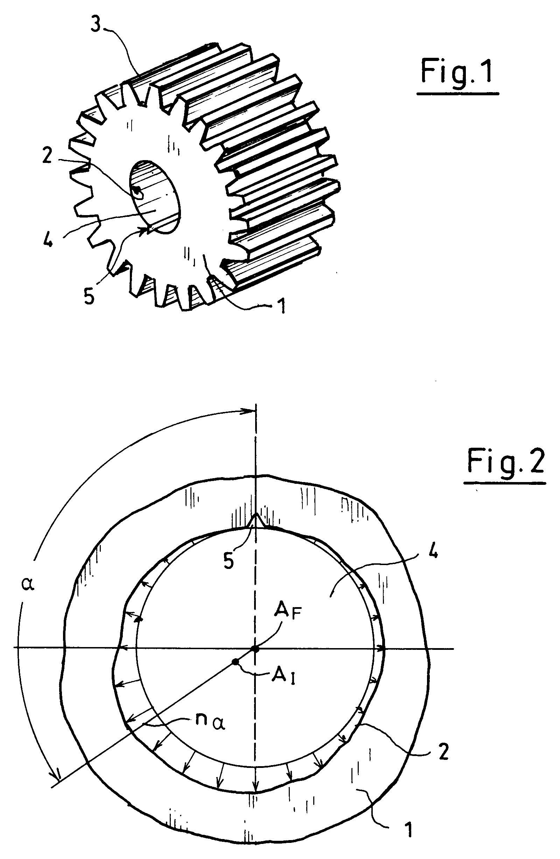

Das in Figur 1 dargestellte Teil, ein Zahnrad (1) mit einem Zahnkranz (3) und einer Innenbohrung (4) soll mit einem Zentrierbund versehen werden, der zentrisch zu der von der bereits fertig bearbeiteten Zahnung (3) vorgegebenen Symmetrieachse (AF) verläuft. Diese Achse (AF) ist vorher bestimmt worden, indem das Zahnrad (1) auf einem Koordinatenmeßgerät hinsichtlich der Lage und Form (Evolventen) des Zahnkranzes hochgenau vermessen worden ist. Hierbei wurden auf dem Koordinatenmeßgerät auch die Formabweichungen der Innenbohrung (4) aufgenommen, beispielsweise indem die Abweichungen n (α) der Fläche (2) der Innenbohrung in Schritten von ca. 1-5° bestimmt und bezogen auf eine Markierung (5) im Rechner des Koordinatenmeßgerätes erst einmal abgespeichert wurden. Die Markierung (5) ist eine mechanische Markierung in Form einer Kerbe bzw. eines ca. 5-10μm tiefen Anrisses.

In Bezug auf diese virtuelle durch die Zahnung vorgegebene Achse (AF) ist die Bohrung (4) wie in Figur 2 übertrieben dargestellt etwas unrund und exzentrisch, d.h. die Achse (AI), die man allein durch messen der Innenbohrung bestimmen würde, läge in einer gegenüber der Achse (AF) verschobenen Position.

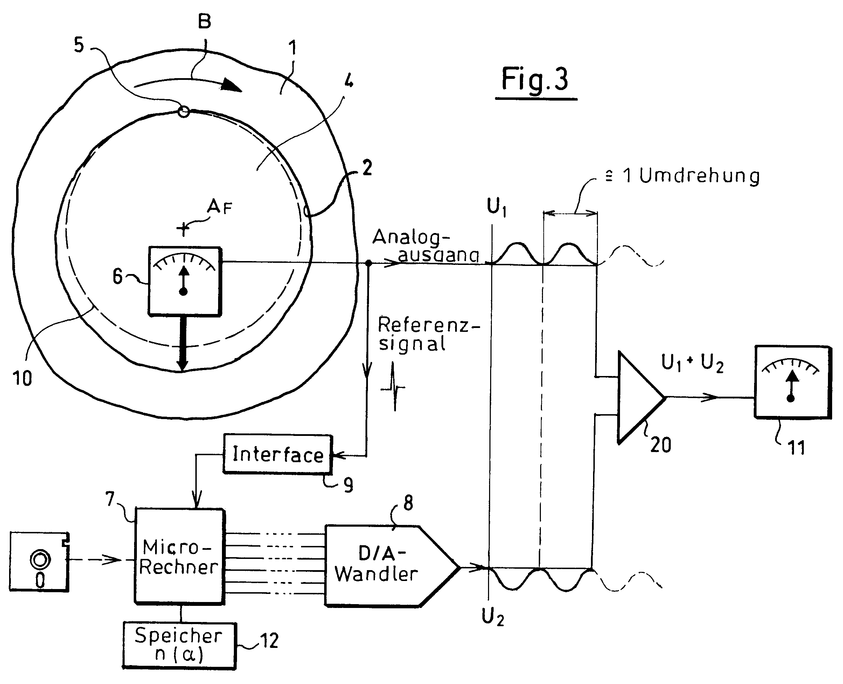

Für die anschließende Bearbeitung des Zahnrades wird dieses auf dem Drehtisch der Bearbeitungsmaschine aufgespannt. Würde man das Zahnrad nach der bisher üblichen Art und Weise zentrieren, indem wie in Figur 3 angedeutet ein Abstandssensor in Form eines mechanischen Tasters (6) an die Fläche (2) der Innenbohrung (4) angesetzt und der Zeigerausschlag beim Drehen des Werkstücks beobachtet und "weggeklopft" wird, dann hätte man das Teil allenfalls auf die Achse (AI) zentriert, nicht jedoch auf die virtuelle Achse (AF).

Stattdessen wird jetzt wie in Figur 3 angedeutet folgendermaßen vorgegangen:

Der Analogausgang des Zeigerinstrumentes (6) ist mit einem Eingang eines Summationsverstärkers (20) verbunden. An den anderen Eingang des Symmationsverstärkers ist ein Digital/Analog-Wandler (8) angeschlossen, dessen Eingang mit einem Mikrorechner (7) verbunden ist. In den Speicher dieses Mikrorechners (7) sind die Formabweichungen n (α) der Fläche (2) der Innenbohrung (4) von der fiktiven Achse (AF) eingegeben. Dies erfolgt beispielsweise dadurch, daß die entsprechenden Korrekturwerte vom Rechner des Koordinatenmeßgerätes mit einer Diskette an den Mikrorechner (7) übertragen werden.

Gleichzeitig ist der Analogausgang des Meßtasters (6) über ein Interface (9) mit dem Rechner (7) verbunden.

Zum Start des Zentriervorganges wird nun so vorgegangen:

Der Drehtisch der Bearbeitungsmaschine, auf dem das Werkstück (1) aufgespannt ist, wird wie durch den Pfeil (B) angedeutet in Drehung versetzt, beispielsweise auf eine konstante Drehzahl von einer Umdrehung pro Sekunde eingestellt.

Hierbei tastet der Taststift des Meßtasters (6) die Fläche (2) ab und liefert jedesmal beim Überfahren der Kerbe (5) einen Signalimpuls, da sich dort der gemessene Abstand abrupt ändert. Dieser Triggersignalimpuls, der im Interface entsprechend aufbereitet worden ist, dient dem Rechner (7) dazu, die Drehzahl des Teils (1) zu ermitteln, bzw. die Zeit für einen Durchlauf festzulegen.

Der Rechner gibt nun bei jedem Start durch den Triggerimpuls die der betreffenden Drehstellung (α) entsprechenden Werte n (α) aus seinem Speicher (12) synchron zur Drehung des Werkstücks (1) aus. Diese Daten werden vom D/A-Wandler (8) in ein Analogsignal umgewandelt und über den zweiten Eingang des Summationsverstärkers (20) dem Abstandssignal ($U_1$) aus dem Analogausgang des Meßtasters (6) mit umgekehrten Vorzeichen überlagert. Das resultierende Signal ($U_1$) + ($U_2$) verschwindet dann, wenn das Werkstück (1) bezüglich der Achse (AF) zentrisch auf dem Drehtisch aufgespannt ist. Bei jeder Änderung der Lage des Werkstücks tritt ein Zeigerausschlag auf, der in an sich bekannter Weise durch "klopfen", d.h. kleine Verschiebungen des Werkstücks (1) zu null gemacht werden kann.

Durch diese Maßnahmen wird faktisch das gleiche erreicht, als wenn das Werkstück (1) eine hochgenau zentrisch zur virtuellen Achse (AF) geschliffene Zylinderfläche besäße.

Das kurze Zucken des Zeigers beim Überfahren der Kerbe (5) kann praktisch eliminiert werden durch einen entsprechenden Gegenimpuls vom Rechner: Durch die Dämpfung und Trägheit des Zeigers folgt dieser etwas verzögert dem abrupt sich ändernden elektrischen Signal, d.h. bis dahin liegt auch schon der Gegenwert vom Rechner vor.

Es ist natürlich nicht unbedingt erforderlich, ein zweites Anzeigeinstrument (11) zu verwenden. Es gibt Meßtaster mit einem zusätzlichen Signaleingang für Summen- bzw. Differenzmessungen, über den der Abstandsmeßwert mit einem externen Signal überlagert werden kann. In diesem Falle ist der Ausgang des D/A-Wandlers (8) gegebenenfalls nach entsprechender Pegelanpassung an diesen Eingang des Meßtasters (6) zu legen.

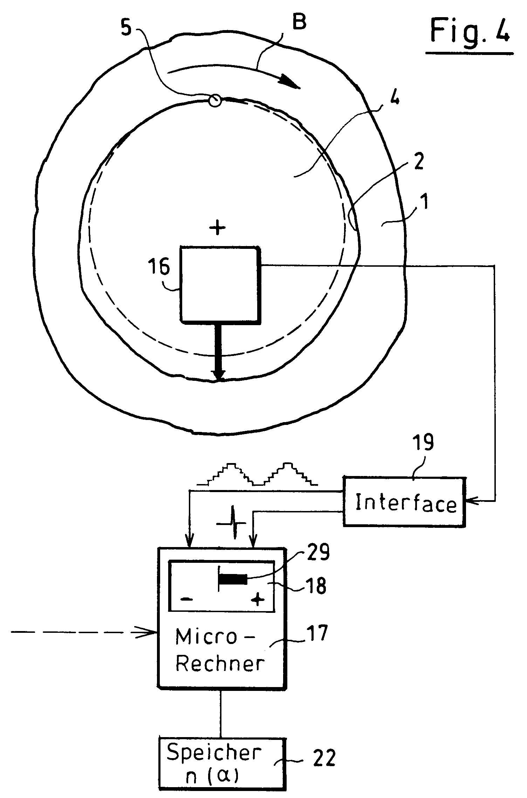

Gemäß dem in Figur 4 dargestellten Ausführungsbeispiel kann auf ein analoges Anzeigeinstrument ganz verzichtet werden. Hier ist der Signalausgang eines Meßtasters (16) über ein Interface (19) mit einem Mikrorechner (17) verbunden. Das Interface (19) formt das analoge Ausgangssignal des Meßtasters (16) in digitale Form um und trennt auch das dem analogen Abstandssignal überlagerte Triggersignal beim Überfahren der Kerbe (5) ab. Die Überlagerung des Abstandsmeßsignals bzw. des Tastermeßwertes mit den gespeicherten Korrekturdaten n (α) erfolgt hier im Rechner (17) online. Das aus der Überlagerung entstehende resultierende Signal wird dann quasianalog auf dem Bildschirm (18) des Rechners (17) in Form eines Balkens (29) ausgegeben, der bei Dezentrierung im Takte der Rotationsfrequenz "atmet". Dieser "Software-Zeiger" (29) dient dann der Bedienperson als visuelles Kriterium dafür, wie die Exzentrizität "wegzuklopfen" ist.

Diese Lösung bietet weitere Vorteile: So kann der Rechner durch einen Vergleich der nach dem Starten der Drehbewegung erhaltenen Abstandsmeßwerte mit den gespeicherten Formabweichungen n ($\alpha$) feststellen, ob der gespeicherte Datensatz n ($\alpha$) überhaupt zu dem gerade zu zentrierenden Werkstück (1) paßt, indem die Formabweichungen unter der Berücksichtigung der eventuell vorhandenen Exzentrizität miteinander verglichen werden.

Dieser Vergleich kann vor- und rückwärts durchgeführt werden, d.h. durch eine Umrechnung der gespeicherten Korrekturwerte n ($\alpha$) in Bezug auf den Drehwinkel $\alpha$ kann dieser Vergleich auch durchgeführt werden, falls das Teil (1) bezogen auf die Messung mit dem Koordinatenmeßgerät später auf dem Drehtisch der Bearbeitungsmaschine "verkehrt herum aufgelegt" bzw. die Drehrichtung (B) vertauscht ist.

Läßt sich weder mit dem "normalen" noch mit dem "umgerechneten" Korrektursignal das Abstandssignal des Meßtasters (16) kompensieren, so gibt der Rechner (17) die Meldung "falsches Werkstück" aus und der vorher beschriebene Zentriervorgang des "Wegklopfens" braucht durch den Bediener gar nicht erst gestartet zu werden.

Mit dem Verfahren kann ein Werkstück nicht nur in Bezug auf den Rundlauf, sondern auch in Bezug auf die Axialruhe augerichtet werden. Bei der Messung auf dem Koordinatenmeßgerät wird dabei die Axialruhe, d.h. die Abweichungen einer Planfläche an der Stirnseite des Werkstücks zu einer zur virtuellen Achse rechtwinkligen Fläche in Abhängigkeit vom Drehwinkel gemessen. Beim Ausrichten mißt man mit dem Taster entsprechend die Axialruhe und überlagert in analoger Weise die Meßergebnisse des Koordinatenmeßgerätes.

In ähnlicher Weise läßt sich die Ausrichtung des Teiles auch entlang der Normalen zu einer kegeligen Fläche vornehmen.

Um alle die genannten Möglichkeiten zu realisieren ist es empfehlenswert, entsprechend Bild 4 vorzugehen und einen freiprogrammierbaren Rechner zur Verarbeitung einzusetzen, der mehrere vom Benutzer auswählbare Programme besitzt.

**Patentansprüche**

1. Verfahren zum Zentrieren bzw. Ausrichten von rotationssymmetrischen Teilen für den Fertigungsprozess in Bezug auf eine virtuelle Achse, gekennzeichnet durch folgende Schritte:

   a) An dem Teil wird eine die Drehlage des Teils charakterisierende Markierung angebracht,

   b) die zu bearbeitende rotationssymmetrische Fläche wird in einer Vielzahl von Winkelpositionen auf einem Meßgerät vermessen und es werden die Abweichungen der Fläche von einem idealen Kreis um die virtuelle Achse in den verschiedenen Winkelpositionen aufgenommen und auf die Markierung bezogen gespeichert,

   c) das Werkstück wird auf den Drehtisch der Bearbeitungsmaschine aufgelegt bzw. in deren Spindel gespannt und die zu bearbeitende rotationssymmetrische Fläche wird von einem Abstandssensor angemessen,

   d) das Werkstück wird in Rotation versetzt und an der Stelle der Markierung wird ein zyklisches Triggersignal abgeleitet,

   e) dem Signal des Abstandssensors wird im Takte des Triggersignales ein aus den gespeicherten Abweichungen abgeleitetes Korrektursignal überlagert,

   f) das überlagerte Gesamtsignal bzw. eine hiervon abgeleitete Signalfolge wird visuell angezeigt.

2. Verfahren nach Anspruch 1, wobei die zu bearbeitende rotationssymmetrische Fläche mit einer Kerbe hinsichtlich ihrer eindeutigen Winkellage markiert wird.

3. Verfahren nach Anspruch 1, wobei das Teil hinsichtlich seiner Winkellage mit einer Farbmarkierung versehen wird.

4. Verfahren nach Anspruch 1, wobei das Signal des Abstandssensors und das Triggersignal einem Rechner zugeführt werden, in dessen Speicher die Abweichungen eingelesen sind, und die Überlagerung des Abstandssignales und des Korrektursignales im Rechner erfolgt und das resultierende Gesamtsignal in geeigneter graphisch aufbereiteter Form auf dessen Bildschirm dargestellt wird.

5. Verfahren nach Anspruch 1, wobei das Signal des Abstandssensors einem Rechner zugeführt wird, in dessen Speicher die Abweichungen eingelesen sind, und daß ein Vergleich zwischen den gespeicherten Abweichungen und dem Signal des Abstandssensors durchgeführt wird und aus dem Vergleich ein zur Identifizierung des Teils dienendes digitales Signal gewonnen wird.

6. Verfahren nach Anspruch 5, wobei die gespeicherten Abweichungen auch hinsichtlich der Drehrichtung des Teils auf die entgegengesetzte Drehrichtung umgerechnet werden und dann mit dem Signal des Abstandssensors verglichen werden.

**7.** Vorrichtung zur Durchführung des Verfahrens nach Anspruch 1 umfassend:

a) ein Koordinatenmeßgerät,

b) eine Bearbeitungsmaschine für rotationssymmetrische Teile mit einem Drehtisch oder einer Spindel,

c) einen Abstandssensor,

d) einen Rechner mit einer Eingabeeinheit für gespeicherte Formabweichungen des zu bearbeitenden Teils, welcher Rechner eine aus den Formabweichungen abgeleitete Signalfolge produziert,

e) eine Anzeigeeinheit, auf der die vom Rechner produzierte Signalfolge und das Ausgangssignal des Abstandssensors überlagert darstellbar sind.

**8.** Vorrichtung nach Anspruch 7, wobei die Anzeigevorrichtung ein analoges Anzeigeinstrument ist und einer elektronischen Anordnung nachgeschaltet ist, die einen Digital/Analog-Wandler enthält, dessen Eingang mit dem Rechner verbunden ist.

**9.** Vorrichtung nach Anspruch 7, wobei der Abstandssensor ein mechanischer Taster ist, dessen Ausgang zusätzlich mit einem Triggereingang des Rechners verbunden ist.

**10.** Vorrichtung nach Anspruch 7 mit einer zusätzlichen Einrichtung zum zyklischen Lesen der auf dem Teil angebrachten Markierung, wobei der Ausgang der Einrichtung mit einem Triggereingang des Rechners verbunden ist.

**11.** Verfahren zum Zentrieren bzw. Ausrichten von rotationssymmetrischen Teilen für den Fertigungsprozess in Bezug auf eine virtuelle Achse, gekennzeichnet durch folgende Schritte:

a) An dem Teil wird eine die Drehlage des Teils charakterisierende Markierung angebracht,

b) die zu bearbeitende rotationssymmetrische Fläche wird in einer Vielzahl von Winkelpositionen auf einem Meßgerät vermessen und es werden die Abweichungen einer Planfläche zu einer zur virtuellen Achse rechtwinkligen Fläche in den verschiedenen Winkelpositionen aufgenommen und auf die Markierung bezogen gespeichert,

c) das Werkstück wird auf den Drehtisch der Bearbeitungsmaschine aufgelegt bzw. in deren Spindel gespannt und die zu bearbeitende rotationssymmetrische Fläche wird von einem Abstandssensor angemessen,

d) das Werkstück wird in Rotation versetzt und an der Stelle der Markierung wird ein zyklisches Triggersignal abgeleitet,

e) dem Signal des Abstandssensors wird im Takte des Triggersignales ein aus den gespeicherten Abweichungen abgeleitetes Korrektursignal überlagert,

f) das überlagerte Gesamtsignal bzw. eine hiervon abgeleitete Signalfolge wird visuell angezeigt.

Fig.1

Fig.2

EP 0 479 173 A2

## Fig.3

B

5
1
4
2

$A_F$

6

10

Analog-ausgang

$\equiv$ 1 Umdrehung

$U_1$

Referenz-signal

Interface

9

7 Micro-Rechner

8 D/A-Wandler

$U_2$

Speicher n ($\alpha$)   12

$U_1$ + $U_2$

20

11

Fig. 4